# EUROPÄISCHE PATENTSCHRIFT

(11) **EP 2 739 427 B1**
(45) Veröffentlichungstag und Bekanntmachung des Hinweises auf die Patenterteilung: **11.09.2019**
(21) Anmeldenummer: 12759356.4
(22) Anmeldetag: 17.07.2012
(51) Int. Cl.: B23K 11/11, B23K 11/16, B23K 11/26

(54) **FÜGEN VON BLECHARTIGEN BAUELEMENTEN MIT ZWISCHENSCHICHT AUS THERMOPLASTISCHEM KUNSTSTOFF**
JOINING OF SHEET MATERIAL HAVING AN INTERMEDIATE SANDWICH LAYER OF THERMOPLASTIC
LIAISON DE PIÈCES DE TÔLE AYANT UNE COUCHE INTERMÉDIAIRE EN MATIÈRE THERMOPLASTIQUE

(30) Priorität: 06.08.2011 DE 102011109708
(43) Veröffentlichungstag der Anmeldung: 11.06.2014
(73) Patentinhaber: Volkswagen Aktiengesellschaft, 38440 Wolfsburg (DE)
(72) Erfinder: VOIGT, Alexander, 04683 Naunhof (DE); GRAUL, Matthias, 38465 Brome (DE)
(86) Internationale Anmeldenummer: PCT/EP2012/003003
(87) Internationale Veröffentlichungsnummer: WO 2013/020636

(56) Entgegenhaltungen:
- FR-A1- 2 709 083
- FR-A3- 2 638 668
- GB-A- 1 359 551
- US-A- 4 419 557
- US-A- 4 650 951

## Beschreibung

Die Erfindung betrifft ein Verfahren zum Fügen von blechartigen Bauelementen.

Die Kombination aus hochfesten Stählen für crashrelevante Bauteile mit mehrschichtigen Verbundblechen für großflächige Bauteile stellt ein insbesondere gegenüber dem Einsatz von Aluminiumwerkstoffen wirtschaftlich günstiges Leichtbaukonzept, insbesondere im Karosseriebau dar. Das Verbundblech besteht dabei üblicherweise aus zwei 0,2 mm bis 0,3 mm dünnen Deckblechen aus Stahl und einer Kernschicht aus thermoplastischem Kunststoff mit einer Dicke von 0,5 mm bis 1,5 mm. Im Vergleich zu gängigen Karosserieblechen ist das damit erreichbare Flächengewicht deutlich geringer. Bei gleichzeitig hoher Biegesteifigkeit bietet das neue Material hohes Leichtbaupotenzial. Derartige Bleche mit innen liegender, elektrisch isolierender Kunststoffschicht gelten für das Widerstands-, Lichtbogen- und Strahlschweißen jedoch als nicht schweißgeeignet. Das Aufschmelzen und Verdrängen der Zwischenschicht über Nebenschluss ist aufgrund der dünnen außen liegenden Stahldeckbleche nicht möglich, da ein Durchbrand des Verbundbleches um die Schweißelektrode die Folge wäre. Die Verbundbleche werden nach heutigem Stand der Technik daher vorzugsweise mechanisch gefügt.

Verbundbleche werden ferner mit hochfesten Stählen im Stand der Technik mit Klebern verbunden, wie beispielsweise im unveröffentlichten Schutzrecht der Anmelderin DE 10 2010 026 040 beschrieben ist. Dabei wird eine Bauteilfixierung bis zur Klebstoffaushärtung durch mechanische Fügeverfahren realisiert, um eine notwendige Handlingfestigkeit im Fertigungsprozess zu gewährleisten. Allerdings ist die Fixierung eines Verbundblechs mit einem bspw. formgehärteten Stahl mit mechanischem Fügeverfahren wirtschaftlich nur schwer umsetzbar. Die hohe Festigkeit von formgehärteten Bauteilen lässt insbesondere kein Vorlochen für Blindnieten und auch kein Clinchen zu.

Um mehrschichtige Verbundbleche zu verschweißen, ist aus der DE 101 11 567 A1 bereits bekannt, Bauteile partiell ohne isolierende Zwischenschicht herzustellen. An diesen Stellen ist das Widerstandspunktschweißen möglich. Die stoffliche Anbindung des außen liegenden (ca. 0,2 mm dünnen) Deckbleches gestaltet sich jedoch schwierig. Derartige Bauteile führen zu einem aufwändigen Herstellungsprozess und erhöhten Kosten.

Aus der DE 4022238 A1 ist bereits bekannt, an ein Verbundblech aus zwei Deckblechen und einer Zwischenschicht aus Kunststoff zunächst Blechstreifen mittels Strahl- oder Quetschnahtschweißen rundum anzufügen. Entlang einer Schnittlinie, welche ausschließlich in dem Bereich der angeschweißten Blechstreifen verläuft, wird eine Blechronde ausgeschnitten, die anschließend durch Punkt- oder Rollnahtschweißen mit anderen Blechbauteilen verschweißt werden kann.

Es ist ferner aus der DE 1615145 schon ein Verfahren bekannt, zwei Verbundbleche, welche jeweils aus einem Trägerblech und beidseitig des Trägerblechs angeordneten Kunststoffbeschichtungen bestehen, durch Punktschweißen miteinander zu verbinden. Jedoch ist eine untere Elektrode durch ein Kabel mit einer entschichteten Stelle des oberen Verbundblechs verbunden, wodurch beim Aufsetzen einer oberen Elektrode ein flächiger Stromfluss durch das Trägerblech erzeugt wird. Hierdurch werden die Beschichtungen zum Schmelzen gebracht. Unter dem Elektrodendruck werden die schmelzenden Schichten weg gedrückt, der Kontakt der beiden Elektroden über die Trägerbleche geschlossen und die Schweißung vollzogen.

Aus der DE 3326612 A1 ist bekannt, eine Verbundplatte mit einer Metallplatte mittels Buckelschweißen zu verschweißen. Hierzu weist die Metallplatte einen Buckel auf, welcher durch eine Elektrode in die Metallschicht und die Kunststoffschicht der Verbundplatte eingedrückt wird bevor der Schweißvorgang beginnt.

Aus der Schrift US 4,650,951 ist ein weiteres Verfahren zum Fügen von Verbundblechen bekannt. Dabei werden dort zwei Verbundbleche miteinander verbunden, die ihrerseits jeweils eine thermische Isolierungsschicht zwischen zwei Blechlagen einschließen. Die verbindung dieser zwei verbundbleche erfolgt dabei zweistufig, wobei in einer ersten Stufe mittels eines Wärmeeintrages die thermische Zwischenschicht erwärmt und mittels mechanischem Druck verformt wird. Im zweiten Verfahrensschritt werden dann die Bleche direkt miteinander verschweißt.

Aufgabe der vorliegenden Erfindung ist daher das Fügen eines ersten blechartigen Bauelements mit einem zweiten blechartigen Bauelement zu ermöglichen, wobei die Bauelemente über mindestens eine Zwischenschicht aus thermoplastischem Grundstoff verbunden sind.

Die Aufgabe wird mit den Merkmalen der unabhängigen Patentansprüche gelöst.

Das erfindungsgemäße Verfahren zum Fügen eines ersten blechartigen Bauelements mit einem zweiten blechartigen Bauelement, wobei die Bauelemente über mindestens eine Zwischenschicht aus thermoplastischem Grundstoff verbunden sind, zeichnet sich aus durch die Merkmale des Anspruchs 1.

Das Aufschmelzen der Zwischenschicht kann mittels temperierbarer Elektroden oder Presselemente erfolgen. Dabei können Elektroden auch durch Kurzschlußschweißen erwärmt und die in den Elektroden gespeicherte Wärmeenergie zum Aufschmelzen der Zwischenschicht verwendet werden.

Da nach dem Aufschmelzen der Zwischenschicht mittels Wärmeeintragung eine Verdrängung der Zwischenschicht im Bereich der Fügestelle erfolgt, ist es möglich, das erste und zweite Bauelement stoffschlüssig mittels Aufschmelzen und damit eine Handlingverbindung im Bereich der Fügestelle herzustellen. Als Handlingverbindung wird in diesem Text eine Verbindung bezeichnet, die primär, aber nicht ausschließlich für eine weitere Verarbeitung geeignet und bestimmt ist. Die mechanischen Eigenschaften der auf diese Weise hergestellten Handlingverbindung sind durch die Einzelheiten des stoffschlüssigen Verbindens sowie der Materialeigenschaften der blechartigen Bauelemente bestimmt und ermöglichen, wie noch im Folgenden genauer dargestellt wird, vorteilhaft ein Verbinden mit einem oder mehreren weiteren Bauelementen. Als Material für Verbundblech eignen sich beispielsweise Metalldeckbleche, wie HC220I gemäß DIN EN 10268 oder HCT500X gemäß DIN EN 10336. Die Kernschicht kann aus thermoplastischem Kunststoff, wie Polyethylen oder Polyamid oder Gemisch aus beiden, bestehen. Alternativ oder zusätzlich kann nach der Verdrängung der Zwischenschicht auch die Herstellung eines elektrischen Kontaktes zwischen dem ersten und zweiten Bauelement im Bereich der Fügestelle erfindungsgemäß vorgesehen sein, wobei der elektrische Kontakt insbesondere Ansatzpunkt für einen weiteren Verfahrensschritt sein kann, bei dem elektrisches Widerstandsschweißen oder dergleichen eingesetzt wird.

Eine weitere Ausführungsform der Erfindung zeichnet sich aus durch Herstellen eines kraftschlüssigen Kontaktes durch mechanische Vorspannung zwischen dem ersten und zweiten Bauelement im Bereich der Fügestelle mittels Abkühlen des ersten und/oder zweiten Bauelements im Bereich der Fügestelle, womit vorteilhaft ein Rückfedern der blechartigen Bauelemente nach dem stoffschlüssigen Verbinden oder insbesondere nach dem Herstellen eines elektrischen Kontaktes zwischen dem ersten und zweiten Bauelement verhindert werden und damit die Prozesssicherheit erhöht werden kann.

Eine weitere Ausführungsform der Erfindung zeichnet sich aus durch stoffschlüssiges Verbinden zumindest eines Element aus der aus dem ersten oder zweiten Bauelements bestehenden Gruppe mit zumindest einem dritten blechartigen Bauelement im Bereich der Fügestelle mittels Aufschmelzen oder Kleben. Das dritte Bauelement ist vorzugsweise aus hochfesten Stahl, womit vorteilhaft eine Kombination eines mehrschichtigen Verbundblechs mit einem Bauelement aus hochfestem Stahl verwirklicht werden kann. Vorteilhaft ist dies insbesondere für die Herstellung von großflächigen Komponenten im Bereich des Karosseriebaus. Das stoffschlüssige Verbinden entweder des ersten, des zweiten und/oder beider Bauelemente mit dem dritten blechartigen Bauelement mittels Aufschmelzen ermöglicht eine ausreichende mechanische Festigkeit der durch die Erfindung realisierten Verbindung, wobei auf den Einsatz von Klebstoff sowie von Fügehilfselementen verzichtet werden und gleichzeitig eine stark reduzierte Korrosionsanfälligkeit erreicht werden kann. Da die verwendeten Stahlmaterialien preisgünstiger sind als die bei üblichen Leichtbaukonzepten eingesetzten Aluminiumwerkstoffe, ergibt sich eine entsprechende Kostenreduktion.

Das stoffschlüssige Verbinden des ersten oder zweiten Bauelements mit zumindest einem dritten blechartigen Bauelement im Bereich der Fügestelle kann vorteilhaft auch zusätzlich oder allein durch Kleben erfolgen. Der Klebstoff kann flächig oder als Kleberaupe auf die Fügestelle aufgetragen werden.

Eine weitere Ausführungsform der Erfindung zeichnet sich aus durch stoffschlüssiges Verbinden des ersten und zweiten Bauelements und stoffschlüssiges Verbinden mit dem dritten Bauelement innerhalb eines gemeinsamen Zeitintervalls, womit eine Prozessoptimierung erreicht werden kann.

Eine weitere Ausführungsform der Erfindung zeichnet sich aus durch stoffschlüssiges Verbinden des ersten und zweiten Bauelements und stoffschlüssiges Verbinden mit dem dritten Bauelement in getrennten Zeitintervallen, womit auf unterschiedliche Gegebenheiten, wie zur Verfügung stehende Werkzeuge oder Zeitkonstanten, eine Optimierung möglich ist.

Eine weitere Ausführungsform der Erfindung zeichnet sich aus durch Entladen einer elektrischen Kondensatorvorrichtung zum Erzeugen des elektrischen Schweißstroms. Vorteilhaft kann mittels der elektrischen Kondensatorvorrichtung ein besonders schneller Aufbau des Schweißstroms erfolgen. Außerdem kann eine vergleichsweise hohe Schweißstromstärke erzielt werden. Unter einer Kondensatorvorrichtung kann ein elektrischer Kondensator zum Speichern von elektrischer Energie verstanden werden.

Eine weitere Ausführungsform der Erfindung zeichnet sich aus durch Erzeugen des elektrischen Schweißstroms unmittelbar nach dem Registrieren der Kontaktierung. Vorteilhaft kann so sichergestellt werden, dass keine Prozesszeit verloren geht. Vorteilhaft kann dadurch der Fügevorgang schnellst möglich komplettiert werden.

Eine weitere Ausführungsform der Erfindung zeichnet sich aus durch Einleiten einer Presskraft in das erste und/oder zweite blechartige Bauelement mittels einer ersten und zweiten Schweißelektrode sowie Ermitteln einer Zeitspanne zwischen einem Begin der Einleitens der Presskraft und der ermittelten Änderungen. Vorteilhaft kann dadurch eine Qualitätssicherung beim Herstellen der Kontaktierung zwischen dem ersten und dem zweiten blechartigen Bauelement erfolgen. Insbesondere kann bei einem Verstreichen einer zu langen Zeit zwischen dem Einleiten der Presskraft und dem Ermitteln der Kontaktierung darauf geschossen werden, dass eine Fehlerbehebung stattfinden muss.

Eine weitere Ausführungsform der Erfindung zeichnet sich aus durch zumindest ein weiteres Aufschmelzen im Bereich der Fügestelle, womit eine erhöhte Festigkeit der hergestellten Verbindung bzw. der hergestellten Verbindungen erreicht werden kann.

In einer weiteren Ausführungsform der Erfindung wird bei dem weiteren Aufschmelzen im Bereich der Fügestelle ein Widerstandsschweißen unter Verwendung von unterschiedlichen Schweißkappen eingesetzt. Insbesondere kann es dann sinnvoll sein, wenn zunächst ein Verbinden des ersten und zweiten Bauelements erfolgt und in einem späteren Zeitintervall ein Verbinden mit dem dritten Bauelement vorgenommen wird. Dabei ist zu berücksichtigen, dass Positionierungstoleranzen bei einer derartigen Rohbauherstellung unvermeidbar sind, wozu vorteilhaft die Verbindungsstellen des ersten und zweiten Bauelements einen gewissen Mindestdurchmesser aufweisen müssen. Mit einem größeren Kappenradius sind dabei größere Schweißlinsendurchmesser und damit Verbindungsstellen mit einem größeren Durchmesser zu erzielen. Da mit wachsendem Kappendurchmesser die Penetrationspotenz der Elektrode und damit die Kunststoffverdrängung tendenziell verschlechtert wird, ist es vorteilhaft, den ersten Prozessschritt mehrmals mit wachsendem Kappendurchmesser zu wiederholen. Es versteht sich, dass nach der ersten Durchführung des stoffschlüssigen Verbindens des ersten und zweiten Bauelements eine separate Wärmeeintragung nicht mehr notwendig ist, da die Zwischenschicht bereits im Bereich der Fügestelle verdrängt worden ist.

Eine weitere Ausführungsform der Erfindung zeichnet sich aus durch Wärmeeintragung und/oder Anwendung von Presskraft mittels eines temperierbaren Presswerkzeugs, wobei mit relativ einfachen Mitteln ein elektrischer Kontakt zwischen dem ersten und zweiten Bauelement im Bereich der Fügestelle erreicht wird.

Eine weitere Ausführungsform der Erfindung zeichnet sich aus durch eine Wärmeeintragung und/oder Anwendung von Presskraft mittels eines temperierbaren Punktschweißwerkzeugs, womit Zeit sparend gleichzeitig ein elektrischer Kontakt und eine Handlingverbindung hergestellt werden können.

Weitere Vorteile, Merkmale und Einzelheiten ergeben sich aus der nachfolgenden Beschreibung, in der unter Bezug auf Zeichnungen Ausführungsbeispiele im Einzelnen beschrieben sind. Gleiche, ähnliche und/oder funktionsgleiche Teile können mit gleichen Bezugszeichen versehen werden.

Es zeigen
- Figur 1: eine schematische Darstellung des Fügens eines ersten blechartigen Bauelements mit einem zweiten blechartigen Bauelement,
- Figur 2: eine schematische Darstellung eines erfindungsgemäßen Verbindens von zwei gefügten blechartigen Bauelementen mit einem dritten blechartigen Bauelement,
- Figur 3: eine schematische Darstellung eines erfindungsgemäßen Verbindens analog wie in Figur 2 mit einem zusätzlichen Verbinden mittels Kleben,
- Figur 4: eine Vorrichtung zur Ausführung des erfindungsgemäßen Verfahrens,
- Figur 5: eine schematische Ansicht eines Verlaufes einer Spannung und einer Stromstärke während einer Ausführung des erfindungsgemäßen Verfahrens, wobei kein Nebenschluss auftritt,
- Figur 6: ein Schaubild analog des in Figur 5 gezeigten, wobei im Unterschied ein Nebenschluss auftritt.

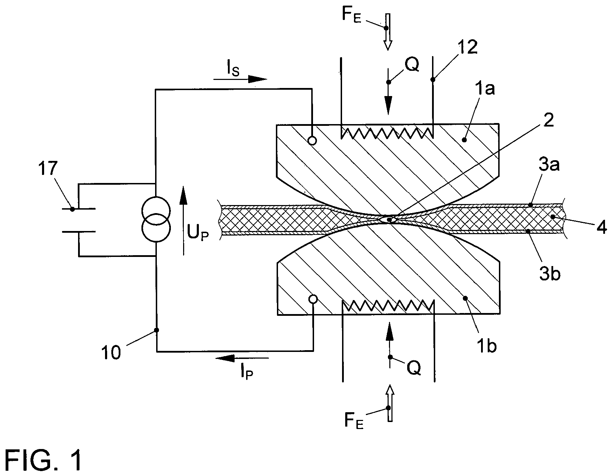

Figur 1 zeigt in schematischer Darstellung eine erste Schweißelektrode 1a mit einer zugeordneten zweiten Schweißelektrode 1b, an die eine Schweißspannung mittels eines elektrischen Schweißkreises 10 angelegt werden kann, wobei im Fall eines durchgeführten Schweißvorgangs ein Schweißstrom I_{S} im Schweißkreis fließt. Über Temperiermittel 12 kann eine Änderung der Wärmemenge Q, die den Elektroden zugeführt bzw. von ihnen abgeführt wird, eingestellt werden.

Zwischen den Elektroden sind ein erstes und ein zweites blechartiges Bauelement 3a, 3b angeordnet, wobei die Bauelemente 3a, 3b über mindestens eine Zwischenschicht 4 aus thermoplastischem Kunststoff verbunden sind.

An einer Fügestelle 2 der Bauelemente 3a, 3b erfolgt ein Aufschmelzen der Zwischenschicht 4 mittels Wärmeeintragung in das erste und/oder zweite Bauelement 3a, 3b. Gleichzeitig oder nachfolgend wird eine Presskraft F_{E} im Bereich der Fügestelle 2 auf die Bauelemente 3a, 3b angewendet, so dass die Zwischenschicht im Bereich der Fügestelle 2 zwischen den Bauelementen 3a, 3b verdrängt wird. Es erfolgt dann ein stoffschlüssiges Verbinden des ersten und zweiten Bauelements 3a, 3b mittels Aufschmelzen des ersten oder zweiten Bauelements 3a, 3b. Üblicherweise werden beide Bauelemente 3a, 3b im Bereich der Fügestelle 2 aufgeschmolzen. Alternativ ist es auch möglich, dass stoffschlüssige Verbinden mittels Anheften, d. h. Vorsehen einer Adhäsionsverbindung zwischen dem ersten und zweiten Bauelement 3a, 3b zu erreichen. Das stoffschlüssige Verbinden erfolgt zur Herstellung einer Handlingverbindung im Bereich der Fügestelle 2. Die Handlingverbindung gewährleistet zumindest eine Handlingfestigkeit, kann aber bedarfsweise auch so ausgeführt werden, dass die miteinander verbundenen Bauelemente 3a, 3b bei einer Endverwendung in Verbindung mit einem weiteren Bauelement ausreichend stark zusammenhalten.

Alternativ oder zusätzlich zu dem beschriebenen stoffschlüssigen Verbinden des ersten und zweiten Bauelements 3a, 3b erfolgt erfindungsgemäß ein Herstellen eines elektrischen Kontaktes zwischen dem ersten Bauelement 3a, 3b im Bereich der Fügestelle 2. Es kann durchaus vorgesehen sein, zunächst lediglich einen elektrischen Kontakt herzustellen zwischen den Bauelementen 3a, 3b, wobei in einem weiteren Verfahrensschritt ein kraftschlüssiger Kontakt zwischen dem ersten und zweiten Bauelement 3a, 3b im Bereich der Fügestelle 2 hergestellt wird, vorzugsweise mittels Kühlen des ersten und/oder zweiten Bauelements 3a, 3b im Bereich der Fügestelle 2, wobei dies vorzugsweise mittels der entsprechend gesteuerten Temperiervorrichtung 12 erfolgt.

Das stoffschlüssige Verbinden mittels Aufschmelzen erfolgt erfindungsgemäß mittels elektrischem Widerstandsschweißen, Lichtbogenschweißen oder Strahlschweißen oder dergleichen über eine Aktivierung des Schweißkreises 10.

Alternativ oder zusätzlich kann gemäß einer weiteren Ausführungsform des erfindungsgemäßen Verfahrens das Verschweißen des ersten blechartigen Bauelements 3a mit dem zweiten blechartigen Bauelement 3b mittels eines durch eine Kondensatorentladung erzeugten Schweißstroms I_{S} erzielt werden. Die Kondensatorentladung ist mittels einer Kondensatorvorrichtung 17 einer elektrischen Energiequelle des Stromkreises 10 erzeugbar. Insbesondere in einem Vergleich zu einer Mittelfrequenztechnologie kann ein höherer Schweißstrom I_{S} erzielt werden, wodurch vorteilhaft kürzere Prozesszeiten erzielbar sind, die sich insbesondere auch positiv auf ein Schweißergebnis auswirken. Vorteilhaft können steilere Temperaturgradienten zwischen den blechartigen Bauelementen 3a und 3b und den Schweißelektroden 1a und 1b realisiert werden.

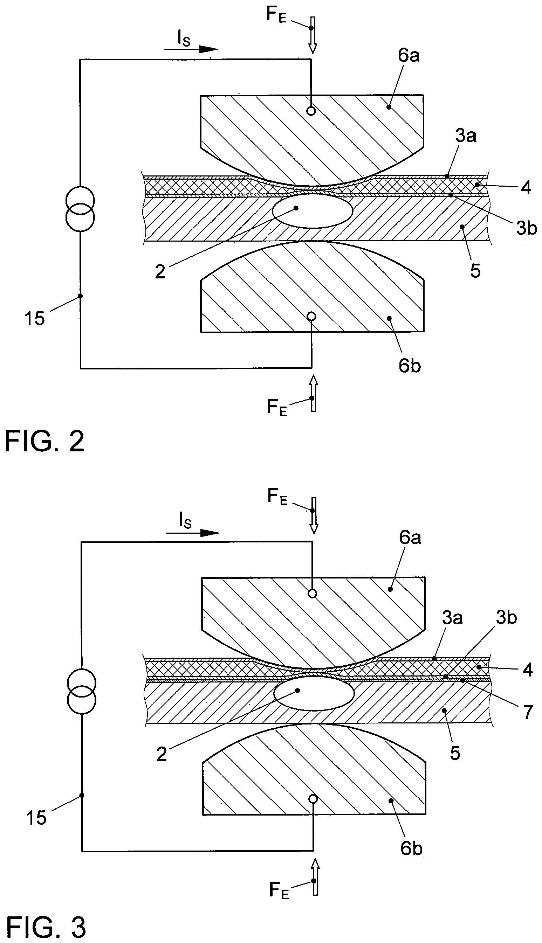

In Figur 2 ist in schematischer Darstellung zusätzlich gegenüber Figur 2 ein drittes blechartiges Bauelement 5 gezeigt, welches unter Verwendung eines Schweißkreises 15 mit den Bauelementen 3a, 3b verbunden wird. Hierzu wird zumindest eines der Bauelemente 3a, 3b oder 5 im Bereich der Fügestelle 2 aufgeschmolzen. Es versteht sich, dass vorzugsweise alle drei Bauelemente 3a, 3b, 5 oder zumindest zwei der genannten Bauelemente aufgeschmolzen werden. Da die Zwischenschicht 4 bereits verdrängt ist, ist eine Anwendung von Presskraft beim Verbinden des Bauelements 5 mit den Bauelementen 3a, 3b nicht erforderlich, allerdings auch möglich.

In Figur 3 ist eine Modifikation des in Figur 2 dargestellten Verfahrens gezeigt, bei dem zwischen dem Bauelement 3b und dem Bauelement 5 eine Klebstoffschicht 7 angeordnet ist. In Figur 3 wird erfindungsgemäß ein elektrischer Kontakt zwischen den Bauteilen 3a, 3b, 5 realisiert und ein stoffschlüssiges Verbinden der genannten Bauteile erreicht.

Der Klebstoff der Klebstoffschicht 7 kann flächig oder als Kleberaupe auf die Fügestelle 2 bzw. in den Bereich zwischen dem Bauelement 3b und dem Bauelement 5 aufgetragen werden. Vorstellbar ist, dass zunächst der in der Figur 1 dargestellte Prozessschritt durchgeführt wird und anschließend der Klebstoff aufgebracht wird. Ferner ist es möglich, den Klebstoff bereits vor Durchführung des in Figur 1 dargestellten Prozessschritts auf die der Zwischenschicht 4 entgegengesetzte Oberfläche des Blechbauteils 3b aufzubringen und den Klebstoff durch Elektronenkraft, analog wie die Zwischenschicht 4 zu verdrängen.

Vorteilhaft kann vorgesehen sein, dass der ausgehärtete Klebstoff der Klebstoffschicht 7 den Hauptanteil an der Verbindungsfestigkeit der hergestellten Verbindung im Bereich der Fügestelle 2 bildet; bspw. mit einer Kraft Fₘₐₓ zwischen 8 kN und 20 kN. Die Schweißverbindung kann vorteilhaft insbesondere die Handlingfestigkeit der gefügten Bauteile gewährleisten und daher eine geringere Verbindungsfestigkeit aufweisen, bspw. in einem Bereich Fₘₐₓ zwischen 1 kN und 6 kN. Ferner können damit vorteilhaft Kräfte aufgenommen werden, die bei der Aushärtung des Klebstoffs aufgrund einer unterschiedlichen Ausdehnung der verbundenen Bauelemente entstehen, ohne dass der Zusammenhalt der Verbindung zwischen den Bauelementen zerstört wird.

Die, insbesondere im Zusammenhang der Figuren 1 und 2 bzw. Figuren 1 und 3 dargestellten Verfahrensschritte können in einem gemeinsamen Zeitintervall oder in getrennten Zeitintervallen durchgeführt werden, so dass das Verfahren an die verschiedensten Umgebungssituationen des Gesamtherstellungsprozesses, bspw. des Karosseriebaus, angepasst werden kann.

Zur Erhöhung der Verbindungsfestigkeit können einzelne oder jeder der Verfahrensschritte zwei- oder mehrfach ausgeführt werden.

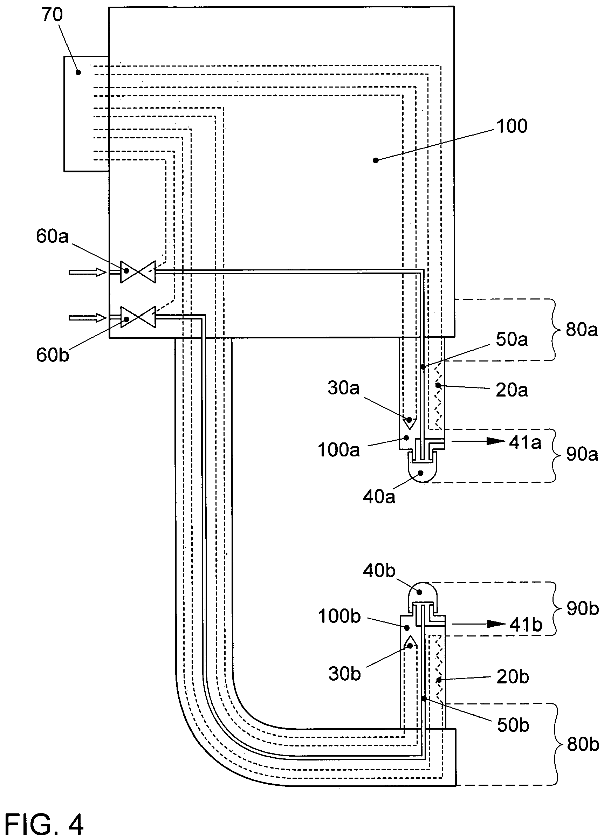

Figur 4 zeigt eine Vorrichtung zur Ausführung des erfindungsgemäßen Verfahrens, wobei 100 eine Schweißanlage mit Schweißelektroden 100a, 100b bezeichnet. Die Schweißelektroden 100a, 100b sind mit Heizelementen 20a, 20b versehen, die jedoch bei anderen Ausführungsformen der Erfindung auch weggelassen sein können. Die Schweißelektroden 100a, 100b weisen Schweißkappen 40a, 40b auf. Die Schweißkappen können durch optionale Wasserkanäle 41a, 41b gekühlt werden. Ferner sind optionale Kühlbohrungen 50a, 50b vorgesehen, die mit Druckluft beaufschlagt werden können, wobei zur Einstellung der Luftmassenströme Druckluftventile 60a, 60b vorgesehen sind, die jeweils mit den Bohrungen 50a bzw. 50b verbunden sind. Zur Messung der Temperatur im Bereich der Schweißelektroden 100a, 100b sind Thermoelemente 20a, 20b vorgesehen, die mit einer Regelungseinrichtung 70 verbunden sind. Bei Einsatz von Kühlluftstrom erfolgt eine Wärmeabfuhr von den Schweißkappen 40a, 40b durch erzwungene Konvektion durch die Kühlluftbohrungen 50a, 50b. Dabei können unabhängig von Schweißparametern, Umgebungseinflüssen oder Taktzeiten durch die Steuerung der Druckventile 60a, 60b und Heizelemente 30a, 30b die gewünschten Schweißelektrodentemperaturen eingestellt werden.

Die Regelungseinrichtung 70 ist ausgelegt und bestimmt zur Durchführung des erfindungsgemäßen Verfahrens und kann insbesondere die Temperatur der Schweißkappen 40a, 40b sowie die angewandte Presskraft in den geeigneten Wertbereichen einstellen.

Es versteht sich, dass der Einsatz von temperierten Schweißelektroden bei allen Bauformen von Widerstandsschweißanlagen, wie der so genannten C-Zange, der X-Zange, Maschinenzange vorgesehen ist. Ferner gilt dies auch für Anlagen zum Lichtbogenschweißen oder Strahlschweißen. Die Schweißanlagen können Stationär- oder Portalanlagen sein.

Wie in Figur 4 gezeigt, ist alternativ oder zusätzlich vorgesehen, dass sich an das Heizelement 20a in Richtung der Schweißkappe 40b ein Abschnitt 90a und in der entgegengesetzten Richtung ein Abschnitt 80a anschließt. Entsprechend schließt sich an das Heizelement 20b in Richtung der Schweißkappe 40b ein Abschnitt 90b und in der entgegengesetzten Richtung ein Abschnitt 80b an. Die Abschnitte 90a und 90b weisen vorteilhaft einen Vergleichsweise kleinen thermischen Widerstand auf, so dass mittels der Heizelemente 20a und 20b erzeugte Wärme besonders gut und/oder schnell in Richtung der Schweißkappen 40a und 40b geleitet werden kann.

Entgegengesetzt zu diesem Effekt weisen alternativ oder zusätzlich die Abschnitte 80a und 80b einen Vergleichsweise hohen Wärmeleitwiderstand auf. Vorteilhaft kann dadurch verhindert werden, dass mittels der Heizelemente 20a und 20b erzeugte Wärme in unerwünschter Art und Weise in Richtung der übrigen Schweißanlage 100 abgeleitet wird. Vorteilhaft kann dadurch in den Bereichen der Heizelemente 20a, 20b sowie den Abschnitten 80a, 90a sowie 90b und 80b ein erwünschtes Temperaturprofil eingestellt werden, dass insbesondere im Bereich der Schweißkappen 40a und 40b besonders hohe und in einer entgegengesetzten Richtung vergleichsweise niedrige Temperaturen aufweist. Insbesondere kann dies bei sogenannten Widerstandspunktschweißzangen, wie in Fig. 4 gezeigt sinnvoll sein, wobei das Temperaturprofil zwischen den Elektrodenkappen bzw. Schweißkappen 40a und 40b und einem entsprechenden Zangengrundkörper durch die gezielte Verwendung von Kupferlegierungen und/oder Chrom-Nickel-Stählen beeinflusst werden kann. Ein entsprechender Wärmefluss von den Heizelementen 20a und 20b zu den Schweißkappen 40a und 40b kann durch entsprechende Bauteile der Abschnitte 90a und 90b, die insbesondere Kupferlegierungen, insbesondere CuCr1Zr und/oder CuNiSiCr aufweisen begünstigt werden. Ein entsprechender Wärmefluss in eine entgegengesetzte Richtung, also von den Thermoelementen 30a und 30b in den Zangengrundkörper und/oder insbesondere in temperaturempfindliche Bauteile der übrigen Schweißanlage 100 kann durch entsprechende Bauelemente 80a und 80b, insbesondere von Elektrodenarmen der Schweißanlage 100, aus einem relativ schlecht wärmeleitenden Material, insbesondere Chrom- Nickel- Stahl vermindert werden. Alternativ oder zusätzlich ist eine Verwendung von keramischen Isolierplatten denkbar, wobei diese zwischen den Heizelementen 20a, 20b und den Abschnitten 80a und 80b und/oder in diesen vorgesehen sein können.

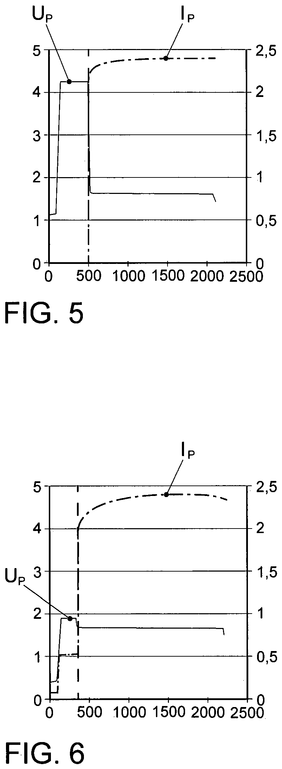

Figur 5 zeigt ein Schaubild von Verläufen eines Prüfstroms I_{P} sowie einer Prüfspannung Up, die in Figur 1 in den Schweißkreis 10 eingezeichnet sind. Figur 5 zeigt die Verläufe ohne Nebenschluss. Auf einer in Figur 5 links dargestellten Y-Achse sind beispielsweise Werte zwischen 0 und 5 Volt der Prüfspannung UE eingezeichnet. Auf einer in Figur 5 rechts dargestellten Y-Achse sind beispielhaft Werte zwischen 0 und 2,5 kA des Prüfstroms I_{P} eingezeichnet. Auf einer X-Achse ist in Figur 5 beispielhaft eine Zeit zwischen 0 und 2500 ms eingezeichnet. Die Prüfspannung U_{P} ist mittels eines durchgezogenen Graphes in Figur 5 dargestellt. Der Prüfstrom I_{P} ist in Figur 5 mittels eines strichpunktierten Graphes dargestellt. Außerdem ist mittels einer senkrechten gestrichelten Linie in Figur 5 ein Zeitpunkt der Kontaktierung der blechartigen Bauelemente 3a und 3b eingezeichnet.

Figur 6 zeigt ein Schaubild Analog des in Figur 5 gezeigten, lediglich mit dem Unterschied, dass zwischen den blechartigen Bauelementen 3a und 3b ein Nebenschluss auftritt.

Im Folgenden wird in Bezug auf die Figuren 5 und 6 eine vorteilhafte Alternative des vorab beschriebenen Verfahrens näher erläutert.

Durch einen Einsatz einer adaptiven Schweißregelung, die insbesondere mittels der Regelungseinrichtung 70 durchführbar ist, kann eine Prozesszeit für das Kontaktieren minimiert werden. Ziel ist eine Kontaktierung der blechartigen Bauelemente 3a und 3b zu registrieren und den Schweißstrom I_{S} in einem unmittelbaren Anschluss in die blechartigen Bauelemente 3a und 3b einzuleiten. Der elektrische Kontakt der blechartigen Bauelemente 3a und 3b kann abhängig von geometrischen Bauteileigenschaften durch die Prüfspannung U_{P} und/oder den Prüfstrom I_{P} erfolgen.

Die Prüfspannung U_{P} liegt von Beginn des Einleitens der Presskraft F_{E} in die blechartigen Bauelemente 3a und 3b an den Schweißelektroden 6a und 6b an. Die in Figur 5 dargestellten, insbesondere gemessenen Spannungs- und/oder Stromstärkenverläufe der Prüfspannung U_{P} und/oder des Prüfstroms I_{P} zeigen eine deutliche Veränderung zum Zeitpunkt der Kontaktierung, der in Figur 5 mittels der senkrechten gestrichelten Linie symbolisiert ist.

Gemäß einer vorteilhaften Alternative kann zwischen einer total Isolation, insbesondere bei einem ersten Füge- und/oder Schweißpunkt an den blecharten Bauelementen 3a und 3b, wie in Figur 5 dargestellt und einem indirekten Stromfluss über bereits vorhandene Nebenschlussstellen, insbesondere andere bereits geschweißte Punkte an den blechartigen Bauelementen 3a und 3b und/oder Nebenschlussbrücken, was in Figur 6 dargestellt ist, unterschieden werden.

Gemäß einer beispielhaften und vorteilhaften Parametrierung der Schweißanlage 100 kann in einem Fall ohne Nebenschluss, der in Figur 5 dargestellt ist, ein Spannungspotenzial von ungefähr 4,3 Volt von den Schweißelektroden 6a und 6b auf die blechartigen Bauelemente 3a und 3b übertragen werden. Zu dem Zeitpunkt der Kontaktierung baut sich ein Stromfluss von ungefähr 2,3 kA auf. In Folge des aufgebauten Stromflusses bricht die Prüfspannung U_{P} auf ungefähr 1,6 Volt zusammen.

Gemäß einer weiteren beispielhaften und vorteilhaften Parametrierung im Falle eines Nebenschlusses, der in Figur 6 dargestellt ist, der insbesondere durch vorher verdrängte Punkte und/oder gesetzte Fügestellten erzeugt wird, wird durch die Prüfspannung U_{P} sofort ein Strom von 0,6 kA hervorgerufen. Zu dem Zeitpunkt der Kontaktierung, der in Figur 6 ebenfalls mittels der gestrichelten senkrechten Linie symbolisiert ist, steigt der Prüfstrom I_{P} durch den dann vorhandenen kürzeren Strompfad durch die Fügestelle der blechartigen Bauelemente 3a und 3b auf ungefähr 2,2 kA an. Die Prüfspannung U_{P} sinkt dabei von ungefähr 1,8 auf ungefähr 1,6 Volt ab.

Die Änderung in den in Figuren 5 oder 6 gezeigten Spannungs- und/oder Stromverläufen der Prüfspannung U_{P} und des Prüfstroms I_{P} können vorteilhaft mittels der Regelungseinrichtung 70 der Schweißeinlage 100 überwacht und/oder ausgewertet werden. Vorteilhaft kann dies mittels üblichen Schweißvorrichtungen ohne weiteres Vorsehen von zusätzlichen Bau- und/oder Regelelementen gewährleistet werden. Vorteilhaft wird ein Heizstrom bzw. der Schweißstrom I_{S} nicht zu einem vorher festgelegten Zeitpunkt gestartet. Die Erhitzung der Schweißelektroden 6a und 6b kann vorteilhaft in einer Echtzeit direkt nach der Kontaktierung der blechartigen Bauelemente 3a und 3b erfolgen.

Die auf den vorab beschriebenen Messgrößen, insbesondere den Verläufen der Prüfspannung U_{P} und/oder des Prüfstroms I_{P} basierende adaptive Regelung ermöglicht es vorteilhaft, den Heizstrom direkt in einem Anschluss an den Verdrängungsprozess der Zwischenschicht 4 einzuleiten. Vorteilhaft können dadurch Prozesszeiten auf ein Minimum reduziert werden.

Gemäß einer weiteren Vorteilhaften Alternative des Verfahrens kann eine Überwachung einer Zeitspanne von einem abgeschlossenen Kraftaufbau, also dem vollständigen Einleiten der Presskraft F_{E} bis zu der in den Figuren 5 und 6 symbolisierten Kontaktierung erfolgen, wobei dadurch vorteilhaft eine Qualitätssicherung des Verdrängungsprozesses realisiert werden kann. Gemäß einer vorteilhaften und beispielhaften Parametrierung kann diese Zeitspanne, wie in Figur 5 dargestellt im Falle ohne Nebenschluss ungefähr 500 ms und in dem in Figur 6 dargestellten Fall mit Nebenschluss ungefähr 350 ms betragen. Vorteilhaft kann diese in den Figuren 5 und 6 dargestellte Zeitspanne mit einem Schwellwert verglichen werden, insbesondere mit einem auf Erfahrungswerten basierenden Schwellwert, der eine maximale Prozessdauer festlegt, insbesondere ca. 5000 ms, insbesondere zwischen 4000 und 5000 ms, insbesondere zwischen 2000 und 5000 ms. Dabei kann bei einer Überschreitung des Grenzwertes auf einen Anlagen- und/oder Bauteilefehler geschlossen werden. Vorteilhaft kann bei der Überschreitung des Grenzwertes dann eine entsprechende Fehlermeldung signalisiert werden.

### Bezugszeichenliste

- 1a: erste Schweißelektrode
- 1b: zweite Schweißelektrode
- 2: Fügestelle
- 2a: Fügefläche
- 3a: erstes blechartiges Bauelement
- 3b: zweites blechartiges Bauelement
- 4: Zwischenschicht
- 5: drittes blechartiges Bauelement
- 6a: drittes Schweißelektrode
- 6b: vierte Schweißelektrode
- 7: Klebstoffschicht
- 10: Schweißkreis
- 12: Temperiereinrichtung
- 15: Schweißkreis
- 17: Kondensatorvorrichtung
- 20a: Heizelement
- 20b: Heizelement
- 30a: Thermoelement
- 30b: Thermoelement
- 40a: Schweißkappe
- 40b: Schweißkappe
- 50a: Kühlbohrung
- 50b: Kühlbohrung
- 60a: Druckluftventil
- 60b: Druckluftventil
- 70: Regelungseinrichtung
- 80a: erster Abschnitt
- 80b: erster Abschnitt
- 90a: zweiter Abschnitt
- 90b: zweiter Abschnitt
- 100: Schweißanlage

## Patentansprüche

1. Verfahren zum Fügen eines ersten blechartigen Bauelements (3a) mit einem zweiten blechartigen Bauelement (3b) mittels elektrischem Widerstandsschweißen, wobei die Bauelemente (3a, 3b) über mindestens eine Zwischenschicht (4) aus thermoplastischem Kunststoff verbunden sind und wobei ein elektrischer Schweißstrom I_{S} zum Durchführen des elektrischen Widerstandsschweißens durch das erste blechartige Bauelement (3a) und das zweite blechartige Bauelement (3b) erzeugt wird, umfassend die Schritte:
- Aufschmelzen der Zwischenschicht (4) mittels Wärmeeintragung in das erste und/oder zweite Bauelement an einer Fügestelle (2)
- Verdrängung der Zwischenschicht (4) im Bereich der Fügestelle (2) mittels Anwendung von Presskraft im Bereich der Fügestelle (2) auf die Bauelemente (3a, 3b)
- Herstellen eines elektrischen Kontaktes zwischen dem ersten und zweiten Bauelement (3a, 3b) im Bereich der Fügestelle (2)
- Registrieren der Kontaktierung des ersten und zweiten (3a, 3b) blechartigen Bauelements durch Anlegen einer Prüfspannung Up zwischen und/oder Einleiten eines Prüfstroms lp in das erste und zweite (3a, 3b) blechartige Bauelement, Ermitteln einer Änderung und/oder eines Verlaufs der Prüfspannung Up und/oder des Prüfstroms I_{P} und Erzeugen des Schweißstroms I_{S} in Abhängigkeit der Änderung und/oder des Verlaufs
- stoffschlüssiges Verbinden des ersten und zweiten Bauelements (3a, 3b) mittels Aufschmelzen des ersten und/oder zweiten Bauelements (3a, 3b) oder Anheften des ersten und zweiten Bauelements (3a, 3b) zur Herstellung einer Handlingverbindung im Bereich der Fügestelle (2).

2. Verfahren nach Anspruch 1, **gekennzeichnet durch** Herstellen eines kraftschlüssigen Kontaktes **durch** mechanische Vorspannung zwischen dem ersten und zweiten Bauelement (3a, 3b) im Bereich der Fügestelle (2) mittels Abkühlen des ersten und/oder zweiten Bauelements (3a, 3b) im Bereich der Fügestelle (2).

3. Verfahren nach einem der vorhergehenden Ansprüche, **gekennzeichnet durch** stoffschlüssiges Verbinden zumindest eines Element aus der aus dem ersten oder zweiten Bauelements (3a, 3b) bestehenden Gruppe mit zumindest einem dritten blechartigen Bauelement (5) im Bereich der Fügestelle (2) mittels Aufschmelzen oder Kleben.

4. Verfahren nach Anspruch 3, **gekennzeichnet durch** stoffschlüssiges Verbinden des ersten und zweiten Bauelements (3a, 3b) und stoffschlüssiges Verbinden mit dem dritten Bauelement (5) innerhalb eines gemeinsamen Zeitintervalls.

5. Verfahren nach Anspruch 3, **gekennzeichnet durch** stoffschlüssiges Verbinden des ersten und zweiten Bauelements (3a, 3b) und stoffschlüssiges Verbinden mit dem dritten Bauelement (5) in getrennten Zeitintervallen.

6. Verfahren nach einem der vorhergehenden Ansprüche, gegen**kennzeichnet durch** Entladen einer elektrischen Kondensatorvorrichtung (17) zum Erzeugen des elektrischen Schweißstroms I_{S}.

7. Verfahren nach einem der vorhergenden Ansprüche, **gekennzeichnet durch** Erzeugen des elektrischen Schweißstroms I_{S} unmittelbar nach dem Registrieren der Kontaktierung.

8. Verfahren nach einem der vorhergehenden Ansprüche, **gekennzeichnet durch** Einleiten einer Presskraft F_{E} in das erste und zweite (3a, 3b) blechartige Bauelement mittels einer ersten und zweiten (1a, 2a) Schweißelektrode, Ermitteln einer Zeitspanne zwischen einem Beginn des Einleitens der Presskraft F_{E} und der ermittelten Änderung.

9. Verfahren nach einem der vorhergehenden Ansprüche, **gekennzeichnet durch** zumindest ein weiteres Aufschmelzen im Bereich der Fügestelle (2).

10. Verfahren nach einem der vorhergehenden Ansprüche, **gekennzeichnet durch** Einsetzen von elektrischem Widerstandsschweißen unter Verwendung von unterschiedlichen Elektrodenformen.

11. Verfahren nach einem der vorhergehenden Ansprüche, **gekennzeichnet durch** Wärmeeintragung und/oder Anwendung von Presskraft mittels eines temperierbaren Presswerkzeugs oder eines temperierbaren Punktschweißwerkzeugs.

## Claims

1. Method for joining a first sheet-like component (3a) with a second sheet-like component (3b) by means of electrical resistance welding, wherein the components (3a, 3b) are joined via at least one intermediate layer (4) made of thermoplastic material, and wherein an electrical welding current Is for the electrical resistance welding of the first sheet-like component (3a) and the second sheet-like component (3b) is produced, comprising the steps of:
- melting the intermediate layer (4) by means of heat input into the first and/or second component at a joint (2),
- displacing the intermediate layer (4) in the region of the joint (2) by application of a pressing force to the components (3a, 3b) in the region of the joint (2),
- establishing electrical contact between the first and second components (3a, 3b) in the region of the joint (2),
- registering the contacting of the first and second sheet-like components (3a, 3b) by applying a test voltage U_{P} between them and/or introducing a test current I_{P} into the first and second sheet-like components (3a, 3b),
- determining a change and/or development of the test voltage U_{P} and/or the test current I_{P} and producing the welding current I_{P} as a function of the change and/or the development,
- materially joining the first and second components (3a, 3b) by melting the first and/or second component(s) (3a, 3b) or adhering the first and second components (3a, 3b) to produce a handling connection in the region of the joint (2).

2. Method according to claim 1, **characterized by** the production of a non-positive contact through mechanical bias between the first and second components (3a, 3b) in the region of the joint (2) by means of cooling of the first and/or second component(s) (3a, 3b) in the region of the joint (2).

3. Method according to any one of the preceding claims, **characterized by** materially connecting at least one element of the assembly comprising the first or second components (3a, 3b) with at least one third sheet-like component (5) in the region of the joint (2) by means of melting or adhesive bonding.

4. Method according to claim 3, **characterized by** materially connecting the first and second components (3a, 3b) and material connection with the third component (5) within a common time interval.

5. Method according to claim 3, **characterized by** materially connecting the first and second components (3a, 3b) and material connection to the third component (5) in separate time intervals.

6. Method according to any one of the preceding claims, **characterized by** the discharge of an electrical capacitor device (17) to produce the electric welding current Is.

7. Method according to any one of the preceding claims, **characterized by** producing the electrical welding current Is immediately after registering the contact.

8. Method according to any one of the preceding claims, **characterized by** introducing a pressing force F_{E} in the first and second sheet-like components (3a, 3b) by means of first and second welding electrodes (1 a, 2a), determining a period of time between the start of the introduction of the pressing force F_{E} and the detected change.

9. Method according to any one of the preceding claims, **characterized by** at least one further melting in the region of the joint (2).

10. Method according to any one of the preceding claims, **characterized by** employing electrical resistance welding using different electrode shapes.

11. Method according to any one of the preceding claims, **characterized by** heat input and/or application of a pressing force by means of a temperature-controlled pressing tool or a temperature-adjustable spot welding tool.

## Revendications

1. Procédé d'assemblage d'un premier composant en tôle (3a) avec un deuxième composant en tôle (3b) au moyen d'un soudage par résistance électrique, les composants (3a, 3b) étant reliés par l'intermédiaire d'au moins une couche intermédiaire (4) en matière plastique thermoplastique et un courant de soudage électrique I_{S} étant généré, pour la réalisation du soudage par résistance électrique, à travers le premier composant en tôle (3a) et le deuxième composant en tôle (3b), comprenant les étapes suivantes :
- fusion de la couche intermédiaire (4) au moyen d'un apport de chaleur dans les premier et/ou deuxième composants au niveau d'un point de jonction (2)
- refoulement de la couche intermédiaire (4) au niveau du point de jonction (2) grâce à l'utilisation d'une force de pression au niveau du point de jonction (2) sur les composants (3a, 3b)
- établissement d'un contact électrique entre les premier et deuxième composants (3a, 3b) au niveau du point de jonction (2)
- enregistrement du contact entre les premier et deuxième composants en tôle (3a, 3b) par l'application d'une tension de contrôle Uₚ entre et/ou introduction d'un courant de contrôle Iₚ dans les premier et deuxième composants en tôle (3a, 3b), détermination d'une variation et/ou d'une évolution de la tension de contrôle Uₚ et/ou du courant de contrôle Iₚ et production du courant de contrôle Iₛ en fonction de la variation et/ou de l'évolution
- liaison par liaison de matière des premier et deuxième composants (3a, 3b) au moyen d'une fusion des premier et deuxième composants (3a, 3b) ou adhérence des premier et deuxième composants (3a, 3b) pour l'établissement d'une liaison de manipulation au niveau du point de jonction (2).

2. Procédé selon la revendication 1, **caractérisé par** l'établissement d'un contact par force grâce à une précontrainte mécanique entre les premier et deuxième composants (3a, 3b) au niveau du point de jonction (2) au moyen d'un refroidissement des premier et/ou deuxième composants (3a, 3b) au niveau du point de jonction (2).

3. Procédé selon l'une des revendications précédentes, **caractérisé par** une liaison par liaison de matière d'au moins un élément parmi le groupe constitué du premier ou du deuxième composant (3a, 3b) avec au moins un troisième composant en tôle (5) au niveau du point de jonction (2) par fusion ou collage.

4. Procédé selon la revendication 3, **caractérisé par** une liaison par liaison de matière des premier et deuxième composants (3a, 3b) et une liaison par liaison de matière avec le troisième composant (5) pendant un intervalle de temps commun.

5. Procédé selon la revendication 3, **caractérisé par** une liaison par liaison de matière des premier et deuxième composants (3a, 3b) et une liaison par liaison de matière avec le troisième composant (5) pendant des intervalles de temps séparés.

6. Procédé selon l'une des revendications précédentes, **caractérisé par** la décharge d'un dispositif de condensateur électrique (17) pour la production du courant de soudage électrique Iₛ.

7. Procédé selon l'une des revendications précédentes, **caractérisé par** la production du courant de soudage électrique Iₛ immédiatement après l'enregistrement du contact.

8. Procédé selon l'une des revendications précédentes, **caractérisé par** l'application d'une force de pression F_{E} aux premier et deuxième composants en tôle (3a, 3b) au moyen de première et deuxième électrodes de soudage (1a, 2a), la détermination d'un laps de temps entre un début de l'application de la force de pression F_{E} et la variation déterminée.

9. Procédé selon l'une des revendications précédentes, **caractérisé par** au moins une autre fusion au niveau du point de jonction (2).

10. Procédé selon l'une des revendications précédentes, **caractérisé par** l'utilisation d'un soudage par résistance électrique à l'aide de différentes formes d'électrodes.

11. Procédé selon l'une des revendications précédentes, **caractérisé par** un apport de chaleur et/ou l'utilisation d'une force de pression au moyen d'un outil de pression régulé en température ou d'un outil de soudage par points régulé en température.
